(19) Europäisches Patentamt
European Patent Office
Office européen des brevets

(11) **EP 0 908 026 B1**

(12) **EUROPÄISCHE PATENTSCHRIFT**

(45) Veröffentlichungstag und Bekanntmachung des Hinweises auf die Patenterteilung:
**13.09.2000   Patentblatt 2000/37**

(51) Int Cl.⁷: **H04B 7/26**, H04Q 7/38

(21) Anmeldenummer: 97931653.6

(86) Internationale Anmeldenummer:
**PCT/DE97/01317**

(22) Anmeldetag: **25.06.1997**

(87) Internationale Veröffentlichungsnummer:
**WO 97/50195 (31.12.1997 Gazette 1997/57)**

(54) **VERFAHREN ZUM HERSTELLEN EINER FUNKVERBINDUNG**

METHOD OF ESTABLISHING A RADIO LINK

PROCEDE D'ETABLISSEMENT D'UNE LIAISON RADIO

(84) Benannte Vertragsstaaten:
**AT BE CH DE DK ES FI FR GB IT LI NL PT SE**

(30) Priorität: **25.06.1996  DE 19625291**

(43) Veröffentlichungstag der Anmeldung:
**14.04.1999   Patentblatt 1999/15**

(73) Patentinhaber: **Mitsubishi International GmbH**
**40476 Düsseldorf (DE)**

(72) Erfinder: **ARNOLD, Jörg**
**D-69117 Heidelberg (DE)**

(74) Vertreter: **Naumann, Ulrich, Dr.-Ing. et al**
**Patentanwälte,**
**Ullrich & Naumann,**
**Luisenstrasse 14**
**69115 Heidelberg (DE)**

(56) Entgegenhaltungen:
**EP-A- 0 459 236          EP-A- 0 663 737**
**WO-A-94/29995          DE-A- 3 337 648**
**GB-A- 2 285 724          GB-A- 2 309 843**

• **PATENT ABSTRACTS OF JAPAN vol. 096, no. 002, 29.Februar 1996 & JP 07 260920 A (ICOM INC), 13.Oktober 1995**

## Beschreibung

Die Erfindung betrifft ein Verfahren zum Herstellen einer Funkverbindung zwischen zumindest zwei Netzteilnehmern eines digitalen Relaisfunknetzes, wobei den einzelnen Netzteilnehmern eine individuelle ortsabhängige Positionskennung zugeordnet wird, so daß die Position aller Netzteilnehmer relativ zueinander bestimmt ist.

Verfahren der in Rede stehenden Art sind im Zusammenhang mit Funknetzwerken wie bspw. den Mobilfunknetzwerken C-, D1-, D2- und E-plus-Netz bekannt. Die bekannten Netzwerke weisen hierzu stationäre Funkeinrichtungen in Form von Relaisstationen auf. Das Herstellen einer Funkverbindung erfolgt mittels externer Vermittlungsverfahren im Rahmen eines externen Funknetzmanagements. Die Lokalisation der Netzteilnehmer und die Verbindungsaufnahme zwischen den Netzteilnehmern erfolgt in diesen Mobilfunknetzen mittels der zentralen Vermittlungsverfahren.

Beim Herstellen einer Funkverbindung spielen die zentralen Relaisstationen die grundlegende Rolle, da sie über eine Aufteilung des Funknetzgebiets in einzelne Netzzellen in einem ständigen wechselseitigen Kontakt mit den Netzteilnehmern stehen. So ist der jeweiligen Relaisstation der Aufenthaltsort des Netzteilnehmers durch dessen Rückmeldung bei der Relaisstation und dann weitergehend bei der Netzzentrale stets bekannt.

Beim Herstellen einer Funkverbindung zwischen zwei Netzteilnehmern werden die Netzteilnehmer zunächst mittels des zentralen Vermittlungsverfahrens lokalisiert. Anschließend wird die Funkverbindung zwischen den Netzteilnehmern exakt berechnet bzw. festgelegt und dann aufgeschaltet. Die vorläufige Berechnung bzw. Festlegung des Verbindungspfads über mögliche Teilverbindungen wird dabei "Routing" genannt.

Die bekannten Verfahren wirken zwischen den Mobilfunkgeräten und den stationären Relaisstationen der jeweiligen Netzzellen der bekannten Funknetze. Bei den bekannten Funknetzen ist also wesentlich, daß externe und zentral gesteuerte Verfahren Anwendung finden, die im wesentlichen von einer externen Betreiberstelle - bspw. einem zentralen Betriebsrechner - außerhalb der einzelnen Mobilfunkgeräte bzw. Funkendgeräte eingesetzt werden.

Bei bekannten Verfahren zum Herstellen einer Funkverbindung innerhalb der bekannten Funknetze ist problematisch, daß zum Herstellen einer Funkverbindung stets stationäre Übertragungsrelais bzw. Relaisstationen erforderlich sind. Daraus folgt, daß bei der Einrichtung bzw. dem Neuaufbau eines Funknetzes der bekannten Art stets zunächst ein flächendeckendes Netz an stationären Relaisstationen aufgebaut werden muß. Damit ist die Flexibilität eines Netzsystems im Hinblick auf eine Neuimplementierung stark reduziert.

Aus der DE-A-3 337 648 ist ein Verfahren zum Herstellen einer Funkverbindung gemäß dem Oberbegriff des Patentanspruchs 1 bekannt. Den einzelnen Netzteilnehmern wird eine individuelle ortsabhängige Positionskennung in Form der Adressen der Teilnehmer über eine aktive Ermittlung bedarfsweise zugeordnet. Damit ist die Position aller Netzteilnehmer relativ zueinander bestimmt. Zum Herstellen einer Funkverbindung besitzt jeder Netzteilnehmer in einer Tabelle Informationen über mindestens zwei Routen zu jedem anderen Netzteilnehmer. Diese Routen wählt der Netzteilnehmer durch Optimierung der Weglängen selbständig aus. Außerdem werden die Routen durch periodisch wiederholte Umfragen den aktuellen Positionen der Netzteilnehmer angepaßt. Ist diese Anpassung zu langsam oder wechseln die Netzteilnehmer sehr schnell ihre Positionen, so erfolgt das Herstellen einer Funkverbindung unter Umständen über veraltete Routen oder ist gar nicht möglich.

Der vorliegenden Erfindung liegt daher die Aufgabe zugrunde, ein alternatives, vereinfachtes Verfahren zum Aufbau einer Funkverbindung zwischen zumindest zwei Netzteilnehmern eines digitalen Relaisfunknetzes bereitzustellen, das sich flexibel der jeweils veränderten Netzkonstellation anpaßt.

Erfindungsgemäß wird die voranstehende Aufgabe durch ein Verfahren mit den Merkmalen des Patentanspruches 1 gelöst. Danach ist das in Rede stehende Verfahren derart ausgestaltet, daß ein sukzessives Vergleichs- und Entscheidungsverfahren bis zum Aufbau der Funkverbindung durchgeführt wird.

Durch die relativ zueinander festgelegte Positionskennung ist der Aufbau einer Funkverbindung schrittweise von Netzteilnehmer zu Netzteilnehmer ermöglicht. Das Vorsehen separater stationärer Relaisstationen ist nicht mehr erforderlich. Zum Aufbau einer Funkverbindung muß ein Quellenteilnehmer lediglich seine eigene Positionskennung und die Positionskennung des Zielteilnehmers wissen. Die Herstellung der Funkverbindung erfolgt dann über zwischen dem Quellenteilnehmer und dem Zielteilnehmer vorhandene weitere Netzteilnehmer, die aufgrund des Wissens ihrer eigenen Positionskennung ein vom Quellenteilnehmer ausgesandtes Funksignal zielgerichtet zu dem Zielteilnehmer weiterleiten können.

Ein Relaisfunknetz, bei dem das erfindungsgemäße Verfahren seine Anwendung finden könnte ist aus der nachveröffentlichten deutschen Patentanmeldung DE-A-1 953 5021 bekannt. Darin ist ein Relaisfunknetz beschrieben, das aus einzelnen Mobilfunkgeräten besteht, die sowohl als Endgerät als auch als Relais dienen. Durch die erfindungsgemäße Zuordnung einer Positionskennung können die Netzteilnehmer in dem bekannten Relaisfunknetz orts- und richtungsabhängig adressiert und zielortgerichtet bzw. richtungsgezielt verbunden werden.

Bei der Erfindung werden die Lokalisation des Netzteilnehmers und die Festlegung des Funkpfads zwischen den Netzteilnehmern nicht exakt mittels stationärer Relaisstationen und festgelegter Funknetzzellen durchgeführt. Die Richtung des Funkpfades zum gewünschten Zielteilnehmer wird beim Funkverbindungsaufbau über die schrittweise Festlegung der aufeinanderfolgenden Teilfunkpfade über weitere Netzteilnehmer richtungsmäßig tendenziell vorgegeben. Während des Aufbaus bzw. der Aufschaltung der Funkverbindung ist die Funkverbindung bis zur Festlegung des letzten Teilfunkpfads noch nicht definitiv festgelegt. Daraus kann sich ergeben, daß möglicherweise mehrere Teilfunkpfade gleichzeitig ausgewählt werden und eine Mehrwegeausbreitung bzw. der Aufbau mehrerer paralleler Funkverbindungen erfolgt.

Folglich ist mit dem erfindungsgemäßen Verfahren ein Verfahren zum Herstellen einer Funkverbindung angegeben, bei dem ein Herstellen einer Funkverbindung auch in einem Netz ohne stationäre Relaisstationen in einfacher Weise ermöglicht ist.

Im Hinblick auf einen einfachen Funkverbindungsaufbau ist vorteilhaft, wenn die an einer Herstellung einer Funkverbindung beteiligten Netzteilnehmer ihre Positionskennung zum Vergleich mit der Positionskennung anderer Netzteilnehmer kennen. Hierzu könnte die einem Netzteilnehmer zugeordnete Positionskennung von dem jeweiligen Netzteilnehmer gespeichert werden.

Hinsichtlich einer besonders einfachen Zuordnung von Positionskennungen könnte die Position relativ zu Funksignale aussendenden Funksignalgebern mit einem vorgebbaren Standort bestimmt werden. Hierzu könnten mindestens drei Funksignalgeber vorgesehen sein. Die Funksignalgeber könnten dann die Funksignale zu bestimmten Zeitpunkten oder nach bestimmten Zeitabständen aussenden. Durch den Empfang der Funksignale von den vorgebbaren Standorten läßt sich die Position des empfangenden Netzteilnehmers in einfacher Weise relativ zu den Funksignalgebem bestimmen. Hierdurch ist eine eindeutige Positionsbestimmung und eine eindeutige Zuordnung einer Positionskennung ermöglicht.

Eine besonders sichere Zuordnung von ortsabhängigen Positionskennungen könnte dann realisiert sein, wenn die Funksignalgeber über das Funknetzgebiet verteilt am Rand des Funknetzgebiets angeordnet sind. Die Funksignalgeber dürfen dabei keine kollinearen Achsensysteme aufspannen.

Im Hinblick auf eine sichere Übertragung bzw. auf einen sicheren Empfang der Funksignale könnten die Netzteilnehmer die Funksignale direkt von den Funksignalgebem oder über andere Netzteilnehmer übertragen empfangen. Mit anderen Worten dienen sämtliche Netzteilnehmer auch als Übermittler der Funksignale für die Zuordnung einer Positionskennung. Dabei könnten die Funksignale der Funksignalgeber von den als Übermittler dienenden Netzteilnehmern lawinenartig weiterübermittelt werden.

Im Hinblick auf eine besonders klare Unterscheidbarkeit der Funksignale von unterschiedlichen Funksignalgebern könnten die Funksignale der Funksignalgeber bei der Weiterübermittlung mit einer übermittlerbedingten oder vorgebbaren Verzögerungszeit weiterübermittelt werden. Damit könnte die Auflösung empfangener Funksignale von räumlich eng benachbarten, jedoch über unterschiedliche Netzteilnehmer übermittelnden Funksignalgebern deutlich verbessert werden.

Die Funksignalgeber könnten in bestimmten Zeitabständen, ggf. monatlich oder auch in wesentlich kürzeren Zeitabständen Funksignale senden. Die Funksignale könnten Zeitsynchronisationssignale sein, die von allen Übermittlern im Relaisfunknetz lawinenartig weitergeleitet werden. Ein derartiges lawinenartiges Weiterleiten könnte gemäß der Funkaufnahmeprozedur ohne Speichervermittlung erfolgen, die in der nachveröffentlichten deutschen Patentanmeldung DE-A-19 608 846 beschrieben ist. Dabei sendet jeder Funksignalgeber einzeln und alle Funksignalgeber senden nacheinander, bspw. zu einem bestimmten programmierten Zeitpunkt oder nach einem bestimmten Zeitabstand.

Die Funksignale der Funksignalgeber könnten bei der Weiterübermittlung im Funknetzgebiet im Hinblick auf eine besonders gute Unterscheidbarkeit der Herkunft der Funksignale ortsabhängige und/oder richtungsabhängige Manipulationen ihres Informationsgehaltes erfahren. Neben der besseren Unterscheidbarkeit hinsichtlich der Herkunft der Funksignale ist dann auch eine besonders unterscheidungskräftige Positionskennung zuordbar. Eine derartige Manipulation könnte eine Laufzeitverzögerung umfassen.

Im Hinblick auf einen Informationsaustausch zwischen den Übermittlern könnten die Funksignale der Funksignalgeber bei der Übermittlung durch die Netzteilnehmer weitere Informationen der als Übermittler dienenden Netzteilnehmer mitübertragen.

Hinsichtlich einer besonders klaren Differenzierung der Funksignale unterschiedlicher Funksignalgeber könnten die Funksignale der unterschiedlichen Funksignalgeber durch die Netzteilnehmer hinsichtlich einer unterschiedlichen Funkfrequenz und/oder einer unterschiedlichen logischen Kodierung und/oder eines unterschiedlichen Informationsgehalts und/oder einer unterschiedlichen Zeitdauer und/oder einer unterschiedlichen Sendereihenfolge physikalisch voneinander unterschieden werden. Dabei ist grundsätzlich wesentlich, daß die Netzteilnehmer eindeutig feststellen können, von welchem Funksignalgeber das jeweils empfangene Funksignal stammt.

Jeder Übermittler, der Funksignale unterschiedlicher Funksignalgeber in einer gewissen zeitlichen Reihenfolge empfängt, empfängt somit eine vom Ort des Empfängers abhängige Signalfolge. Aus den Zeitabständen der eintreffenden Funksignale ist der Ort des Empfängers eindeutig bestimmbar. Die den Netzteilnehmern zugeordneten Positionskennungen entwickeln sich wegen der Relaisverzögerungen orts- und richtungsabhängig innerhalb des Netzgebiets.

Bei Vorliegen von bspw. drei Funksignalgebern könnte das Funksignal des ersten Funksignalgebers bei Berücksichtigung von Relaisverzögerungen nach 1 Sek. bei dem betreffenden Netzteilnehmer eintreffen, das Funksignal des zweiten Funksignalgebers nach 3 Sek. und das Funksignal des dritten Funksignalgebers nach 5 Sek. Daraus ließe sich eine Positionskennung 1-3-5 erzeugen.

Eine weitere Möglichkeit der Erzeugung einer Positionskennung könnte durch ein von der Anzahl an Übermittlungen abhängiges Erhöhen eines Zählwerts oder Zählarguments innerhalb des Funksignals abgeleitet werden. Mit anderen Worten wird bei jeder Übermittlung des jeweiligen Funksignals ein Zahlenwert um bspw. 1 erhöht. Bei Vorliegen von z.B. drei Funksignalgebern könnte dann eine Positionskennung aus der jeweiligen Anzahl von Übermittlungen des jeweiligen Funksignals wie folgt bestehen. Hat bspw. das erste Funksignal drei Übermittlungen hinter sich gebracht, das zweite Funksignal zehn Übermittlungen und das dritte Funksignal zwanzig Übermittlungen, wäre eine Positionskennung 3-10-20 denkbar. Damit könnten die Funksignale der Funksignalgeber bei der Weiterübermittlung im Funknetzgebiet eine ortsabhängige und/oder richtungsabhängige Änderung von Zählargumenten, die die Funksignale enthalten, durch ein Weiterzählen durch die jeweiligen Übermittler erfahren. Mit anderen Worten ist eine ortsabhängige und richtungsabhängige Differenzierung der Positionssequenzen erreicht, wobei jeder Übermittler bei der Übermittlung eine Schrittzahl chronologisch mitzählt bzw. weiterzählt und diese als Informationsbestandteil im Gebersignal abändert bzw. hinzufügt. Diese Positionskennungen entwickeln sich hierbei wegen der weiter gezählten Schrittzahl ortsabhängig und richtungsabhängig über das Netzgebiet.

Eine dritte Möglichkeit der Positionskennung könnte erreicht werden, wenn die Funksignalgeber aus Satelliten des Ground-Positioning-Systems (GPS) bestünden. Dabei empfangen die Netzteilnehmer als Signale ihre absolute geographische Position. Diese besteht aus den Parametern geographische Breite und geographische Länge. Die Positionskennung könnte dann lediglich aus den über das GPS erhaltenen geographischen Positionsdaten bestehen.

Zur Realisierung der Positionskennung mittels des GPS muß die Gerätehardware aufwendiger gestaltet werden als für den Empfang von den im Netz angeordneten Funksignalgebern. Dieses System erübrigt jedoch den lawinenartigen Aufbau des Positionskennungssystems und entlastet dadurch das Netz erheblich. Die Anwendung des GPS zur Lokalisierung der Netzteilnehmer bietet eine hohe räumliche Auflösung, womit auch eine sichere Ortung des Netzteilnehmers in Notsituationen für das Zuhilfekommen von Hilfsdiensten, Rettungsdiensten etc. ermöglicht wäre. Eine direkte Führung derartiger Hilfsdienste zu dem Aufenthaltsort des Netzteilnehmers wäre dadurch in einfacher Weise möglich.

Die Positionskennung könnte in vorteilhafter Weise - vergleichbar einer Postleitzahl - aus einer Zeichenfolge und/oder Zahlenfolge bestehen, die direkt aus der Positionssequenz bzw. aus der zeitlichen Reihenfolge des Eintreffens der Funksignale von unterschiedlichen Funksignalgebern ableitbar ist. Hierbei könnte die Zahlenfolge der Positionskennung aus den Zahlenwerten der Zeitdifferenzen der unterschiedlichen Funksignale der Funksignalgeber relativ zueinander oder relativ zu einem bestimmten Bezugssignal der Funksignale beim Empfang durch die Netzteilnehmer bestehen.

Als eine Alternative könnte die Zahlenfolge der Positionskennung - wie bereits beschrieben - aus den Zahlenwerten der Zählargumente, insbesondere der Schrittzahlen bei der Weiterübermittlung der unterschiedlichen Funksignale der Funksignalgeber bestehen. In einer weiteren Alternative könnte die Zahlenfolge der Positionskennung aus den Zahlenwerten von geographischen Positionsdaten, insbesondere der geographischen Länge und der geographischen Breite, die von den Netzteilnehmern empfangen werden, bestehen. Diese Positionskennungen könnten den Netzteilnehmern am Ort ihres Empfangs als Adressen im Funknetzgebiet zugeordnet werden. Damit könnten die Positionskennungen ein ortsabhängiges und richtungsabhängiges Positionskennungssystem bilden. Bei der Aufnahme der Funkverbindung bzw. beim Herstellen der Funkverbindung könnten die Netzteilnehmer die gewünschten Zielteilnehmer mit diesen Positionskennungen bzw. Adressen adressieren.

Für das Herstellen der Funkverbindung ist wesentlich, daß die Netzteilnehmer die eigene Positionskennung sowie die Positionskennungen des Quellenteilnehmers und des Zielteilnehmers kennen. Dann könnte ein beim Funkverbindungsaufbau zwischen einem Quellenteilnehmer und einem Zielteilnehmer angesprochener, als Übermittler dienender Netzteilnehmer seine Positionskennung, die Positionskennung des Zielteilnehmers und die Positionskennung des Quellenteilnehmers oder ggf. des vorherigen Übermittlers miteinander vergleichen und anschließend entscheiden, ob er eine Weiterübermittlung durchführt. Mit anderen Worten vergleicht ein angesprochener Netzteilnehmer bzw. Übermittler die Zielteilnehmerkennung, die Quellenübermittlerkennung und seine eigene Kennung miteinander. Der Übermittler prüft dabei, ob seine eigene Positionskennung mehr mit der Zielteilnehmerkennung ähnelt als die Positionskennung des Quellenübermittlers. Ist dies der Fall, so übermittelt er weiter, im anderen Fall wird die Übermittlung über ihn nicht mehr fortgesetzt. Im Falle seiner weiteren Übermittlung ist der Übermittler näher am Zielteilnehmer als sein Quellenübermittler. Eine weitere Übertragung durch den Übermittler ist dann nicht mehr sinnvoll, wenn er weiter von dem Zielteilnehmer entfernt ist, als der jeweilige Quellenübermittler. Im letztgenannten Fall übermittelt der Quellenübermittler selbst weiter. Durch dieses Prinzip kann die gewünschte Funkverbindung sukzessiv hergestellt

Das Vergleichs- und/oder Entscheidungsverfahren könnte auf einem Ähnlichkeitsvergleich der Positionskennungen, insbesondere einem fuzzy-logischen Entscheidungsverfahren beruhen.

Zur Erzeugung alternativer Verbindungswege und damit einer besonders sicheren Verbindungsherstellung könnte beim Aufschalten der Funkverbindung eine Mehrwegeausbreitung erzeugt werden.

Im Falle der Nutzung des GPS zur Zuordnung einer Positionskennung zu den Netzteilnehmern könnte die Positionskennung aus bspw. der geographischen Länge und Breite bestehen. Diese geographischen Positionsdaten oder auch eine andere Art der Positionskennung könnten beim Aufschalten der Funkverbindung automatisch vom Quellenteilnehmer zum Zielteilnehmer mitübermittelt werden. Dadurch wäre eine automatische Information von Hilfs- und/oder Rettungseinrichtungen wie bspw. dem ADAC (Allgemeiner Deutscher Automobilclub) realisierbar. Dies würde ein vereinfachtes Auffinden des Quellenteilnehmers bspw. in einer Notsituation ermöglichen, in der der Quellenteilnehmer seine genaue Position entweder nicht kennt oder aufgrund großer Aufregung oder gesundheitlicher Beeinträchtigung nicht mehr richtig übermitteln kann. Eine derartige automatische Positionsermittlung bei Aufnahme einer Funkverbindung könnte auch bei bekannten Funknetzsystemen vorgesehen werden. Dies könnte bspw. durch Implementierung eines GPS-Chips in ein herkömmliches Mobiltelefon realisiert sein.

Die Anwendung des erfindungsgemäßen Verfahrens zum Herstellen einer Funkverbindung könnte auch bei herkömmlichen Mobilfunknetzen der obengenannten Art erfolgen, wobei bei einer entsprechenden Positionskennung der Netzteilnehmer auf das Vorsehen von stationären Relaisstationen verzichtet werden könnte. Damit wäre keine zentrale Netzverwaltung mehr erforderlich.

Im folgenden wird ein Ausführungsbeispiel eines möglichen Verfahrens hinsichtlich des Ähnlichkeitsvergleichs beschrieben, der von einem angesprochenen Übermittler durchgeführt werden muß, um zu entscheiden, ob die Funkverbindung weiterhin über ihn aufgebaut werden soll oder ob es günstiger ist, den Verbindungsaufbau bei ihm abzubrechen:

Zunächst sendet der Quellenteilnehmer seinen Funkaufruf zur Verbindungsaufnahme mit den erforderlichen Funkrufparametem A an seine Übermittlerumgebung seines Sende-/Empfangsbereichs bzw. Kontraktionsbereichs ab. Die Parameter A enthalten als einen Anteil der Quellenkennung A2 die Positionssequenz bzw. Positionskennung $A_{2Q}$: $(q_1, ..., q_n)$ und als einen Anteil der Zielteilnehmerkennung A1 die Positionskennung A1: $(z_1, ... z_n)$. Diese Positionssequenzen bzw. Positionskennungen bestehen aus der Zeitabständesequenz oder der Schrittzahlensequenz oder der Sequenz geographischer Parameter bzw. Positionsdaten der bodengestützten oder satellitengestützten Signalgeber. Die Zielteilnehmerkennung A1 ist dem Benutzer oder dem Quellenteilnehmer aus einer Art Telefonbuch mit sämtlichen Positionskennungen der Zielteilnehmer bekannt. Ein derartiges Telefonbuch kann in Form einer elektronischen Speicherung beim Quellenteilnehmer vorliegen. Die Aktualisierung des Telefonbuchs erfolgt nach jedem Zuordnungsvorgang der Positionskennung. Dieser Zuordnungsvorgang kann täglich, stündlich oder in noch kürzeren Zeitabständen erfolgen. Beispielhaft soll das Verfahren des weiteren nur noch mittels der Schrittzahlenparameter $q_n$ und $z_n$ erläutert werden. Es kann jedoch für die bereits genannten Arten der Positionskennungen identisch angewendet werden. Die jeweilige verwendete Anwendung kann im Hinblick auf technische oder wirtschaftliche Aspekte geprüft werden.

Die angesprochenen erreichbaren Übermittler vergleichen nun jede Position $z_n$ der Zielteilnehmerleitzahl bzw. -kennung $A_1$ mit der entsprechenden Position $q_{Zn}$ der eigenen Positionskennung $A_{2Z}$ und mit der entsprechenden Position $q_{Qn}$ der Positionskennung $A_{2Q}$ des Quellenteilnehmers bzw. vorherigen Übermittlers. Dazu werden die rechnerischen Schrittzahldifferenzsequenzen $D_{A1,A2Z}$, $D_{A1,A2Q}$ zwischen den Schrittzahlsequenzen $A_1$ und $A_{2Z}$, $A_{2Q}$ gebildet.

$$D_{A1,A2Z}: (d_n^{A1,A2Z}) = D_{A1,A2Z}: (z_1 - q_{Z1}, ..., z_n - q_{Zn})$$

$$D_{A1,A2Q}: (d_n^{A1,A2Q}) = D_{A1,A2Q}: (z_1 - q_{Q1}, ..., z_n - q_{Qn})$$

Die Differenzen $d_n$ werden durch die Funktion F abgebildet und die Bilder $F(d_n)$ werden in S summiert.

$$F(d_n) = 1 \text{ für Betrag } (d_n^{A1,A2Z}) < \text{Betrag } (d_n^{A1,A2Q})$$

$$F(d_n) = 0 \text{ für Betrag } (d_n^{A1,A2Z}) = \text{Betrag } (d_n^{A1,A2Q})$$

$$F(d_n) = -1 \text{ für Betrag } (d_n^{A1,A2Z}) > \text{Betrag } (d_n^{A1,A2Q})$$

Die Summe S der Funktionswerte $F(d_n)$ der Differenzsequenzen der Schrittzahldifferenzen

$$S = \text{Sum}_{n=0 \text{ bis } n=s} (F(d_n))$$

gibt dann das Maß für die Entscheidung eines Übermittlers, den Funkaufruf des Quellenteilnehmers weiterzugeben. Die Summationsgrenze s ist hierbei die Zahl der eingesetzten Funksignalgeber im Netzgebiet. Bei einem positiven Maß S wird ein Übermittler prinzipiell den Funkaufruf weitergeben können und bei einem neutralen oder negativen Maß S nicht. Wenn die Übermittler ihr Ergebnis aus dem Positionskennungsvergleich an die jeweilige Quelle - Quellenteilnehmer oder vorheriger Übermittler - zurückgeben, so kann der Quellenteilnehmer bzw. der vorherige Übermittler den Übermittler mit dem größtmöglichen Maß auswählen und gezielt zur Übermittlung des Funkaufrufs im Rahmen einer Einwegausbreitung auswählen. Wird jeweils der erreichbare Übermittler mit dem größten Entscheidungsmaß in der Übermittlung ausgewählt, so entsteht eine besonders zielstrebige räumliche Verbindungsaufnahme, ohne das Vorliegen von Mehrwegeausbreitungen.

Durch dieses Funkverbindungsverfahren kann eine lawinenartige Funkkontaktaufnahme vermieden werden. Die Funkkontaktaufnahme findet vielmehr räumlich zielgerichtet statt. Sie kann je nach Entscheidungsverfahren als Mehrwegeausbreitung oder als gezielte Einwegausbreitung gestaltet werden. Bei diesem Funkverbindungsverfahren muß dem Quellenteilnehmer nur die Positionskennung des Zielteilnehmers bekannt sein.

Die Positionskennung eines Zielteilnehmers wird nach einer erneuten Funksignalgeberaktion wieder erneuert bzw. geändert und in einer bereits aufgeschalteten Funkverbindung den Übermittlern und dem Quellenteilnehmer übermittelt.

Bei dem erfindungsgemäßen Verfahren kann die Adressierung in einem Relaisfunknetz aus einem netzteilnehmerspezifischen Adressierungsanteil und einem ortsspezifischen Adressierungsanteil zusammengesetzt werden.

Die Erfindung unterstützt auch bestehende Funkverbindungen zu mobilen und bewegten Netzteilnehmern. Wenn der bewegte Netzteilnehmer in einem initialen Funkkontakt erreicht ist, ist er gleichzeitig lokalisiert, denn eine Positionskennung wird protokollmäßig im Funkverkehr mitübertragen. Dies ermöglicht den Netzteilnehmern die Entwicklungen der Positionskennungen zu berechnen bzw. zu extrapolieren und die Funkverbindung durch die Positionskennungsadressierung zur nächsten Ortlage des Zielteilnehmers zu lenken.

Das Problem der Bewegung der Netzteilnehmer und des damit gegebenenfalls erforderlichen Korrigierens der Funkverbindungsstrecke läßt sich damit vermeiden, daß der Netzteilnehmer ein Telekommunikationsgerät besitzt, das aus einem stationären Relais und einem mobilen Endgerät besteht. In diesem Fall könnte das Relais mit der Positionskennung versehen sein und den Funkverbindungspfad zu dem Endgerät trotz Bewegung des Endgerätes individuell schließen. Damit stünde das Relais stets als stationärer Ansprechpunkt für Funkverbindungen im Sinne eines Heimrelais zur Verfügung.

Abschließend sei ganz besonders hervorgehoben, daß die zuvor rein willkürlich gewählten Ausführungsbeispiele des Zuordnens einer Positionskennung lediglich zur Erörterung der erfindungsgemäßen Lehre dienen, diese jedoch nicht auf diese Ausführungsbeispiele einschränken.

**Patentansprüche**

1. Verfahren zum Herstellen einer Funkverbindung zwischen zumindest zwei Netzteilnehmern eines digitalen Relaisfunknetzes, wobei den einzelnen Netzteilnehmern eine individuelle ortsabhängige Positionskennung zugeordnet wird, so daß die Position aller Netzteilnehmer relativ zueinander bestimmt ist,

 **dadurch gekennzeichnet**, daß jeder Netzteilnehmer seine eigene Positionskennung sowie die Positionskennungen des Quellenteilnehmers und des Zielteilnehmers kennt und daß ein beim Funkverbindungsaufbau zwischen einem Quellenteilnehmer und einem Zielteilnehmer angesprochener, als Übermittler dienender Netzteilnehmer seine Positionskennung, die Positionskennung des Zielteilnehmers und die Positionskennung des Quellenteilnehmers oder ggf. des vorherigen Übermittlers miteinander vergleicht und eine Weiterübermittlung durchführt, wenn seine eigene Positionskennung mehr der Zielteilnehmerkennung ähnelt als die Positionskennung des Quellenteilnehmers bzw. des vorherigen Übermittlers, und im anderen Fall keine Weiterübermittlung durchführt, wobei die Übermittlung im letztgenannten Fall über den Quellenteilnehmer bzw. vorherigen Übermittler fortgesetzt wird.

2. Verfahren nach Anspruch 1, dadurch gekennzeichnet, daß die einem Netzteilnehmer zugeordnete Positionskennung von dem jeweiligen Netzteilnehmer gespeichert wird.

3. Verfahren nach Anspruch 1 oder 2, dadurch gekennzeichnet, daß die Position relativ zu Funksignale aussendenden Funksignalgebern - vorzugsweise mindestens drei Funksignalgeber - mit einem vorgebbaren Standort bestimmt wird.

4. Verfahren nach Anspruch 3, dadurch gekennzeichnet, daß die Funksignalgeber die Funksignale zu bestimmten Zeitpunkten oder nach bestimmten Zeitabständen aussenden, wobei die Funksignalgeber vorzugsweise über das Funknetzgebiet verteilt am Rand des Funknetzgebiets angeordnet sind.

5. Verfahren nach Anspruch 3 oder 4, dadurch gekennzeichnet, daß die Netzteilnehmer die Funksignale direkt von den Funksignalgebern oder über andere Netzteilnehmer übertragen empfangen und/oder daß die Funksignale der Funksignalgeber von den als Übermittler dienenden Netzteilnehmern lawinenartig weiterübermittelt werden.

6. Verfahren nach Anspruch 5, dadurch gekennzeichnet, daß die Funksignale der Funksignalgeber bei der Weiterübermittlung mit einer übermittlerbedingten oder vorgebbaren Verzögerungszeit weiterübermittelt werden und/oder daß die Funksignale der Funksignalgeber bei der Weiterübermittlung im Funknetzgebiet eine ortsabhängige und/oder richtungsabhängige Manipulation ihres Informationsgehaltes erfahren und/oder daß die Funksignale der Funksignalgeber bei der Weiterübermittlung im Funknetzgebiet eine ortsabhängige und/oder richtungsabhängige Laufzeitverzögerung erfahren und/oder daß die Funksignale der Funksignalgeber bei der Übermittlung durch die Netzteilnehmer weitere Informationen der Übermittler mitübertragen.

7. Verfahren nach Anspruch 5 oder 6, dadurch gekennzeichnet, daß die Funksignale der unterschiedlichen Funksignalgeber durch die Netzteilnehmer hinsichtlich einer unterschiedlichen Funkfrequenz und/oder einer unterschiedlichen logischen Kodierung und/oder eines unterschiedlichen Informationsgehalts und/oder einer unterschiedlichen Zeitdauer und/oder einer unterschiedlichen Sendereihenfolge physikalisch voneinander unterschieden werden.

8. Verfahren nach einem der Ansprüche 5 bis 7, dadurch gekennzeichnet, daß die Funksignale der Funksignalgeber bei der Weiterübermittlung im Funknetzgebiet eine ortsabhängige und/oder richtungsabhängige Änderung von Zählargumenten, die die Funksignale enthalten, durch ein Weiterzählen durch die jeweiligen Übermittler erfahren oder daß die Funksignalgeber aus Satelliten des Ground-Positioning-Systems (GPS) bestehen, wobei die Positionserkennung vorzugsweise aus den über das GPS erhaltenen geographischen Positionsdaten besteht.

9. Verfahren nach einem der Ansprüche 1 bis 8, dadurch gekennzeichnet, daß die Zahlenfolge der Positionskennung aus den Zahlenwerten der Zeitdifferenzen der unterschiedlichen Funksignale der Funksignalgeber relativ zueinander oder relativ zu einem bestimmten Bezugssignal der Funksignale beim Empfang durch die Netzteilnehmer besteht oder daß die Zahlenfolge der Positionskennung aus den Zahlenwerten der Zählargumente, insbesondere der Schrittzahlen bei der Weiterübermittlung der unterschiedlichen Funksignale der Funksignalgeber besteht oder daß die Zahlenfolge der Positionskennung aus den Zahlenwerten von geographischen Positionsdaten, insbesondere der geographischen Länge und der geographischen Breite, die von den Netzteilnehmern empfangen werden, besteht.

10. Verfahren nach einem der Ansprüche 1 bis 9, dadurch gekennzeichnet, daß die Positionskennungen den Netzteilnehmern am Ort ihres Empfangs als Adressen im Funknetzgebiet zugeordnet werden und/oder daß die Positionskennungen ein ortsabhängiges und richtungsabhängiges Positionskennungssystem bilden.

11. Verfahren nach einem der Ansprüche 1 bis 10, dadurch gekennzeichnet, daß die Netzteilnehmer die gewünschten Zielteilnehmer beim Aufschalten einer Funkverbindung mit diesen Positionskennungen bzw. Adressen adressieren.

12. Verfahren nach einem der Ansprüche 1 bis 11, dadurch gekennzeichnet, daß das Vergleichs- und/oder Entscheidungsverfahren auf einem Ähnlichkeitsvergleich der Positionskennungen, insbesondere einem fuzzy-logischen Entscheidungsverfahren beruht.

13. Verfahren nach einem der Ansprüche 1 bis 12, dadurch gekennzeichnet, daß beim Aufschalten der Funkverbindung die Positionskennung bzw. die geographischen Positionsdaten des Quellenteilnehmers automatisch vom Quellenteilnehmer zum Zielteilnehmer mitübermittelt wird bzw. werden.

## Claims

1. Method for establishing a radio connection between at least two network participants in a digital relay radio network, an individual location-dependent position identifier being associated with the individual network participants so that the position of all of the network participants relative to each other is determined, characterised in that each network participant knows its own position identifier and the position identifiers of the source participant and of the target participant, and in that a network participant, which is addressed when the radio connection is created between a source participant and a target participant and which acts as a transmitter, compares the position identifier thereof, the position identifier of the target participant and the position identifier of the source participant, or optionally of the previous transmitter, with each other and effects a further transmission if its own position identifier is more similar to the target participant identifier than the position identifier of the source participant or of the previous transmitter and, otherwise, does not effect a further transmission, the transmission in the latter case being continued by means of the course participant or the previous transmitter.

2. Method according to claim 1, characterised in that the position identifier which is associated with a network participant is stored by the network participant.

3. Method according to claim 1 or 2, characterised in that the position is determined relative to radio signal transmitters - preferably at least three radio signal transmitters - which emit radio signals and which have a predeterminable location.

4. Method according to claim 3, characterised in that the radio signal transmitters emit the radio signals at specific times or at specific time intervals, the radio signal transmitters being arranged at the edge of the radio network range, preferably distributed across the radio network range.

5. Method according to claim 3 or 4, characterised in that the network participants receive the radio signals transmitted directly from the radio signal transmitters or via other network participants, and/or in that the radio signals of the radio signal transmitters are re-transmitted in the manner of an avalanche by the network participants which act as transmitters.

6. Method according to claim 5, characterised in that the radio signals of the radio signal transmitters in the case of re-transmission are re-transmitted with a time delay which is transmitter-dependent or predeterminable, and/or in that the radio signals of the radio signal transmitters when re--transmitted in the radio network range undergo a manipulation, which is location-dependent and/or direction-dependent, of their information content, and/or in that the radio signals of the radio signal transmitters when re-transmitted in the radio network range undergo an operating time delay, which is location-dependent and/or direction-dependent and/or in that the radio signals of the radio signal transmitters, when transmitted by the network participants, also transmit additional information from the transmitters.

7. Method according to claim 5 or 6, characterised in that the radio signals of the different radio signal transmitters are distinguished physically from each other by the network participants in respect of a different radio frequency and/or a different logical encoding and/or a different information content and/or a different duration and/or a different transmission sequence.

8. Method according to any one of claims 5 to 7, characterised in that the radio signals of the radio signal transmitters when re-transmitted in the radio network range undergo a location-dependent and/or direction-dependent change of numerical arguments, which the radio signals contain, by means of an advance by the transmitters, or in that the radio signal transmitters comprise satellites from the Ground Positioning System (GPS), the position identifier preferably comprising the geographical position data obtained via the GPS.

9. Method according to any one of claims 1 to 8, characterised in that the numerical sequence of the position identifier comprises the numerical values of the time differences of the different radio signals of the radio signal transmitters relative to each other or relative to a specific reference signal of the radio signals when received by the network participant, or in that the numerical sequence of the position identifier comprises the numerical values of the numerical arguments, in particular the incremental numbers in the case of the re-transmission of the different radio signals of the radio signal transmitters, or in that the numerical sequence of the position identifier comprises the numerical values of geographical position data, in particular the geographical longitude and the geographical latitude which are received by the network participants.

10. Method according to any one of claims 1 to 9, characterised in that the position identifiers are associated with the network participants at the location of their reception as addresses in the radio network range, and/or in that the position identifiers form a location-dependent and direction-dependent position identification system.

11. Method according to any one of claims 1 to 10, characterised in that the network participants address the desired target participants with those position identifiers or addresses when a radio connection is established.

12. Method according to any one of claims 1 to 11, characterised in that the comparison and/or decision method is based on a similarity comparison of the position identifiers, in particular a fuzzy-logic decision method.

13. Method according to any one of claims 1 to 12, characterised in that, when the radio connection is established, the position identifier or the geographical position data of the source participant is/are also automatically transmitted by the source participant to the target participant.

**Revendications**

1. Procédé d'établissement d'une liaison radio entre au moins deux participants ou noeuds d'un réseau radio-numérique à relais, où est attribué aux différents noeuds un identificateur de position dépendant de leur localisation, de manière à déterminer la position mutuelle relative de tous les noeuds, caractérisé

en ce que chaque noeud du réseau connaît son propre identificateur de position ainsi que l'identificateur de position du noeud-source et l'identificateur de position du noeud-cible et

en ce que, au début de l'établissement d'une liaison radio entre un noeud-source et un noeud-cible, un noeud du réseau sollicité en tant que transmetteur compare son identificateur de position avec l'identificateur de position du noeud-source et avec l'identificateur de position du noeud-cible ou, le cas échéant, avec l'identificateur du transmetteur précédent, avant de procéder à une retransmission si son propre identificateur de position présente une similitude plus grande avec l'identificateur de position du noeud-cible qu'avec l'identificateur de position du noeud-source ou, le cas échéant, qu'avec celui du transmetteur précédent et, si ce n'est pas le cas, ne procédera pas à une retransmission, le noeud-source, ou, le cas échéant, le transmetteur précédent, poursuivant alors la transmission.

2. Procédé suivant la revendication 1,
   caractérisé
   en ce que l'identificateur de position attribué à un noeud du réseau est mis en mémoire à ce noeud.

3. Procédé suivant la revendication 1 ou la revendication 2,
   caractérisé
   en ce que la position est déterminée par rapport à des émetteurs de signaux radio ayant une position prédéterminable, ces émetteurs étant de préférence au nombre d'au moins trois.

4. Procédé suivant la revendication 3,
   caractérisé
   en ce que les émetteurs de signaux radio émettent des signaux radio à des moments déterminés ou à des intervalles de temps déterminés et qu'ils sont de préférence répartis dans la zone du réseau radio et disposés vers le bord de la zone du réseau radio.

5. Procédé suivant la revendication 3 ou la revendication 4,
   caractérisé

   en ce que les noeuds du réseau reçoivent directement les signaux radio émis des émetteurs de signaux radio ou les reçoivent après transmission par d'autres noeuds du réseau et/ou
   en ce que les signaux radio des émetteurs radio sont retransmis en cascade par les noeuds du réseau faisant office de transmetteurs.

6. Procédé suivant la revendication 5
   caractérisé

   en ce que les signaux radio des émetteurs radio sont, lors de la retransmission, transmis avec un retard prédéterminable ou un retard déterminé par le transmetteur, et/ou
   en ce que les signaux radio des émetteurs radio sont, lors de la retransmission dans la zone du réseau radio, soumis à une transformation de l'information qu'ils véhiculent, cette transformation étant fonction de la localisation et/ou de la direction, et/ou
   en ce que les signaux radio des émetteurs radio sont, lors de la retransmission dans la zone du réseau radio, soumis à un retard en fonction de la localisation et/ou de la direction et/ou en ce que les signaux radio des émetteurs radio, lors de la transmission par les noeuds du réseau, transmettent encore d'autres informations émanant des transmetteurs.

7. Procédé suivant la revendication 5 ou la revendication 6
   caractérisé
   en ce que les signaux radio des différents émetteurs de signaux radio peuvent être discriminés physiquement les uns des autres par les noeuds du réseau par le fait que ces signaux radio ont une fréquence d'émission différente et/ou un codage logique différent et/ou un contenu informatif différent et/ou une durée différente et/ou un séquencement d'émission différent.

8. Procédé suivant l'une quelconque des revendications 5 à 7
   caractérisé

   en ce que les signaux radio des émetteurs de signaux radio sont soumis, lors de la retransmission dans la zone du réseau, à une altération, en fonction de la localisation et/ou de la direction, de valeurs de compteur contenues dans les signaux radio, en ce sens que chaque transmetteur incrémente ce compteur ou
   en ce que les émetteurs de signaux radio consistent en des satellites faisant partie du GPS (Ground Positioning System), l'identificateur de position étant alors constitué de préférence des données de positionnement obtenues à l'aide du GPS.

9. Procédé suivant l'une quelconque des revendications 1 à 8
   caractérisé

   en ce que la séquence numérique de l'identificateur de position est constituée par les valeurs numériques des écarts temporels existant, à la réception du signal par les noeuds du réseau, entre les différents signaux radio des émetteurs, ces écarts étant considérés les uns par rapports aux autres ou par rapport à un signal de référence déterminé ou

en ce que la séquence numérique de l'identificateur de position est constituée par les valeurs numériques des valeurs de compteurs, en particulier par les valeurs de pas concomitantes de la retransmission des différents signaux radio des émetteurs radio ou

en ce que la séquence numérique de l'identificateur de position est constituée par les valeurs numériques de données géographiques de positionnement, en particulier par la longitude et la latitude, ces données ayant été captées par les noeuds du réseau.

10. Procédé suivant l'une quelconque des revendications 1 à 9
caractérisé

en ce que les identificateurs de position des noeuds du réseau sont assignés, sur le lieu de leur réception, à des adresses dans la zone du réseau radio et/ou
en ce que les identificateurs de position des noeuds forment un système d'identificateurs de position qui dépend de la localisation et de la direction.

11. Procédé suivant l'une quelconque des revendications 1 à 10
caractérisé
en ce que, lorsqu'ils entament l'établissement de la liaison, les noeuds du réseau adressent les noeuds du réseau qu'ils désirent atteindre en utilisant ces identificateurs de position ou ces adresses.

12. Procédé suivant l'une quelconque des revendications 1 à 11
caractérisé
en ce que le processus de comparaison et de décision repose sur une comparaison des similitudes entre indicateurs de position, en particulier sur un procédé décisionnel à logique floue.

13. Procédé suivant l'une quelconque des revendications 1 à 12
caractérisé
en ce que, au début de l'établissement de la liaison radio, l'identificateur de position ou les données géographiques de positionnement du noeud-source du réseau est/sont transmis simultanément, et de manière automatique, du noeud-source au noeud-cible du réseau.